# EUROPÄISCHE PATENTANMELDUNG

(11) **EP 0 728 797 A1**
(43) Veröffentlichungstag der Anmeldung: **28.08.1996**
(21) Anmeldenummer: 95119174.1
(22) Anmeldetag: 06.12.1995
(51) Int. Cl.: C08J 3/22, C08L 21/00, C08K 3/36

(54) **Trans-Polyoctenamer als Trägermaterial für polymergebundene flüssige Kautschukchemikalien**

(30) Priorität: 04.02.1995 DE 19503779
(71) Anmelder: HÜLS AKTIENGESELLSCHAFT, D-45764 Marl (DE)
(72) Erfinder: Huhn, Günter, Dr., D-45772 Marl (DE); Dittrich, Uwe, Dr., D-01445 Radebeul (DE)

(57) **Zusammenfassung**

Flüssige Kautschukchemikalien lassen sich bei der Verarbeitung nur schwer handhaben. Sie werden deshalb an hochadsorbierende Füllstoffe gebunden. Dieses ist jedoch mit einigen Nachteilen, z.B. geringe Lagerstabilität, verbunden. Durch den erfindungsgemäßen Einsatz von trans-Polyoctenamer als polymeren Träger in Kombination mit Kieselsäure können flüssige Kautschukchemikalien gebunden werden. Daraus hergestellte Kautschukbatches sind gut verarbeitbar und lagerstabil.

## Beschreibung

Bei den in der Kautschukindustrie verwendeten Chemikalien und Hilfsstoffen handelt es sich in erster Linie um Vernetzungsmittel, Alterungs- und Ozonschutzmittel, Verarbeitungshilfen und, bei Einsatz von Mineralfüllstoffen, um Füllstoff-Verstärkungsadditive. Die Einsatzmengen dieser Komponenten betragen in der Regel weniger als 15 Gewichtsteile, bezogen auf 100 Gewichtsteile Kautschuk.

In Reinform liegt die Mehrzahl dieser Hilfsstoffe in fester Form als Pulver oder kristallin vor.

Die als Feststoffe vorliegenden Chemikalien werden von den Herstellerfirmen in verschiedenen Lieferformen bzw. Zubereitungen angeboten, beispielsweise als
Pulver,
Öl-gecoatetes Pulver,
Preßgranulat oder
Masterbatch.

Daneben gibt es jedoch auch einige Chemikalien, die in flüssiger Form vorliegen. Hierbei handelt es sich überwiegend um Füllstoff-Verstärkeradditive, z. B. Schwefel-Silane, die jedoch nur in geringen Dosierungen (3 bis 10 phr) eingesetzt werden. Diese Additive sind für die Kautschukverarbeiter insofern problematisch, als die üblichen Kleinmengen-Verwiege- und Dosieranlagen nur für Feststoffe ausgelegt sind. Flüssige Kleinkomponenten müssen deshalb manuell verwogen und dosiert werden. Dies ist in der Regel mit höheren Kosten verbunden und stellt eine zusätzliche Fehlerquelle dar.

Eine bekannte Problemlösung ist, diese Flüssigchemikalien an hochadsorbierende Füllstoffe zu binden (Dry Liquids). Verwendet werden hierzu Füllstoffe, die ohnehin im Kautschuk eingesetzt werden, vorzugsweise Kieselsäure und/oder Ruß. Ruß hat den Nachteil, nur in schwarzen Gummimischungen eingesetzt werden zu können. Beim Einsatz im Reifen spielt dies jedoch keine Rolle. In diesem Bereich dürfte er deshalb das optimale und preisgünstigste Trägermaterial darstellen. Für helle bzw. farbige Gummiartikel müßte ein heller Mineralfüllstoff verwendet werden. Kieselsäure ist insofern problematisch, als es zu unerwünschten Reaktionen des Wirkstoffs kommen kann, beispielsweise zur Hydrolyse von Silanen. Eine spezielle luft- und feuchtigkeitsdichte Verpackung ist erforderlich.

Als Trägermaterialien für Masterbatches dienen neben Wachsen vor allem "thermoplastische, gesättigte polare Kohlenwasserstoffe" (Zitat Firmenprospekt Rheinchemie) unter Zusatz von Dispergatoren. Unter "polymeren Kohlenwasserstoffen" sind zu verstehen in erster Linie Polyolefine, Ethylen-Propylen-Elastomere (EPM) und Ethylen-Vinylacetat-Copolymere (EVA), meistens in Kombination miteinander. Das Trägermaterial wird dadurch auf die jeweilige Chemikalie abgestimmt. Die Auswahlkriterien sind:
- gute Verträglichkeit zwischen Träger und Chemikalie,
- hoher Wirkstoffgehalt,
- schonendes Mischen des Trägers und der Chemikalie bei niedrigen Temperaturen, um Nebenreaktionen zu vermeiden,
- chemische Stabilität bei langen Lagerzeiten,
- gute Verträglichkeit des Trägermaterials mit den üblichen Elastomeren und
- problemloses Handling der granulierten Masterbatches (Lagerung, Silierung, Verwiegung und Dosierung).

Es wurde nun überraschenderweise gefunden, daß trans-Polyoctenamer in Kombination mit Kieselsäure als polymeres Trägermaterial für flüssige Kautschukchemikalien eingesetzt werden kann.

Die flüssigen Kautschukchemikalien können dabei in Mengen von 40 bis 55 %, bezogen auf trans-Polyoctenamer und Kieselsäure eingearbeitet werden.

Das trans-Polyoctenamer wird dabei gemäß der EP-B 0 508 056 hergestellt. Die Molmasse von trans-Polyoctenamer sollte 90 000 bis 120 000, vorzugsweise 100 000 betragen, die Kristallinität bei Raumtemperatur 20 bis 30 %. Ein teilweiser Ersatz von trans-Polyoctenamer - max. 10 % - durch EPM ist dann ratsam, wenn die erhaltenen Masterbatch-Granulate auf Grund der Polyoctenamer-Kristallinität zu spröde und brüchig werden. Durch den EPM-Zusatz lassen sich Plastizität und Flexibilität der Granulate optimieren.

Bei der Verwendung von polaren Trägermaterialien besteht allgemein das Problem, daß sich die flüssigen Chemikalien wie Weichmacher verhalten. Dadurch werden die Polymeren sehr weich und klebrig. Ferner wird die Aufnahmekapazität des Polymers von der Verträglichkeit mit der Flüssigkeit bestimmt. Polymere Si-Füllstoffaktivatoren und Schwefel-Silane sind mit den üblichen Polaren nur begrenzt verträglich, so daß es bereits bei Mengen von 10 bis 20 % zum Austritt der Flüssigkeit aus dem Polymer kommt (sogenanntes Ausschwitzen). Solche Masterbatche sind weder granulierbar noch handhabbar.

Trans-Polyoctenamer erlaubt dagegen in Kombination mit Kieselsäure die Herstellung nicht klebriger und gut granulierbarer Masterbatches. Die Doppelbindungen von trans-Polyoctenamer sind hier nicht von Nachteil. Normalerweise führen Verbindungen mit hohem Doppelbindungsgehalt bei der Kautschukverarbeitung mit vielen Chemikalien zu unerwünschten Nebenreaktionen, z. B. Vernetzungen. Bei der Verarbeitung von Silanen treten mit trans-Polyoctenamer jedoch erst bei Temperaturen > 160 °C Vernetzungsreaktionen auf, was in der Praxis nicht erreicht wird.

Die flüssigen Kautschukchemikalien, die sich für den Einsatz mit trans-Polyoctenamer und Kieselsäure eignen, sind Vinyl- und Mercaptosilane, Schwefelsilane, ferner silangruppenhaltige flüssige Polybutadiene sowie Di- und Polyglycole. Peroxide und ihre Coagenzien eignen sich allerdings nicht für die erfindungsgemäße Verarbeitung. Diese Verbindungen werden ausschließlich mit silikatischen Füllstoffen formuliert, wobei die Phlegmatisierung der hochaktiven Verbindungen im Vordergrund steht. Polymere Träger, auch gesättigte, können für diese Substanzklasse naturgemäß nicht verwendet werden.

Durch das trans-Polyoctenamer sind die Silane vor Luftfeuchtigkeit und somit vor Hydrolyse gut geschützt. Werden die Silane nur an Kieselsäure gebunden, ist das Endprodukt nur luftdicht verpackt lagerstabil. Außerdem ist trans-Polyoctenamer mit allen üblichen Elastomeren gut verträglich.

Testmischungen auf Basis eines Butadien-Styrol-Copolymerisats (SBR 1712) mit 75 Gewichtsteilen hochaktive Kieselsäure zeigen, daß die Vulkanisatwerte mit Bis-(3-triethoxysilylpropyl)-tetrasulfid (Si 69) bzw. 2-(3-Cyclohexen-1-yl-)ethyl-triethoxysilan (T 47), jeweils in flüssiger und in Batchform, gleich sind (siehe Beispiele A bis D).

Gegenüber den nur mit Kieselsäure formulierten Silanen bieten die erfindungsgemäßen trans-Polyoctenamer-Masterbatches folgende Vorteile: die Silane sind besser vor äußeren Einflüssen geschützt, sie sind nicht staubend, lassen sich problemlos handhaben und unter schonenden Bedingungen vollständig in Kautschukmischungen einmischen. Die Masterbatches sind nicht klebrig und gut granulierbar und über einen langen Zeitraum lagerstabil.

Das Verhältnis von trans-Polyoctenamer zu Kieselsäure sollte 1 : 1,2 bis 1,2 : 1, besonders bevorzugt 1 : 1 betragen. Typische Zusammensetzungen von Masterbatches sind:

| | |
|---|---|
| trans-Polyoctenamer | 25 % |
| Kieselsäure | 25 % |
| Flüssigchemikalie | 50 % |

oder

| | |
|---|---|
| trans-Polyoctenamer | 17 % |
| EPM | 8 % |
| Kieselsäure | 25 % |
| Flüssigchemikalie | 50 % |

Die adsorbierende Menge Wirkstoff hängt nicht nur von der BET-Oberfläche der Kieselsäure ab, sondern auch von der Molmasse der Flüssigchemikalie.

Bei niedrigmolekularen Flüssigkeiten, beispielsweise Si 69®, Molmasse 537, beträgt das Verhältnis von Kieselsäure zu Wirkstoff 1 : 2 unter Verwendung einer Kieselsäure mit einer BET-Oberfläche von 130 m²/g. Um das gleiche Verhältnis mit T 47 herzustellen, ist eine Kieselsäure mit einer BET-Oberfläche von 170 m²/g erforderlich. Bei einem silangruppenhaltigen flüssigen Polybutadien (z. B. Polyvest® 25), mittlere Molmasse 9 000, ist auch unter Verwendung einer Kieselsäure mit einer BET-Oberfläche von 230 m²/g nur ein Verhältnis von Kieselsäure zu Wirkstoff von 1 : 1,6 möglich.

Zur Herstellung der erfindungsgemäßen Chemikalienbatches ist zu beachten. daß sie nicht einfach durch Auflösen von trans-Polyoctenamer in der flüssigen Chemikalie und Verrühren mit Kieselsäure hergestellt werden können. Es ist erforderlich, die Flüssigkeit und die Kieselsäure unter Scherung und Friktion bei höherer Temperatur (ca. 80 °C) in das trans-Octenamer einzuarbeiten. Die Versuche wurden deshalb auf einem Laborwalzwerk und einem Labor-Innenmischer durchgeführt. Für eine kontinuierliche Produktion bieten sich jedoch eher marktgängige Mischextruder mit nachgeschaltetem Granulator an. Frühere Versuche mit Chemikalienbatches zeigten, daß der sogenannte "Scherwalzenextruder" (Fa. Condux) sich bestens dafür eignet, eventuell genügt aber bereits ein "Z-Kneter" mit Austragsschnecke und Granulator. Es können auf jeden Fall vorhandene und bekannte Verfahrenstechniken verwendet werden.

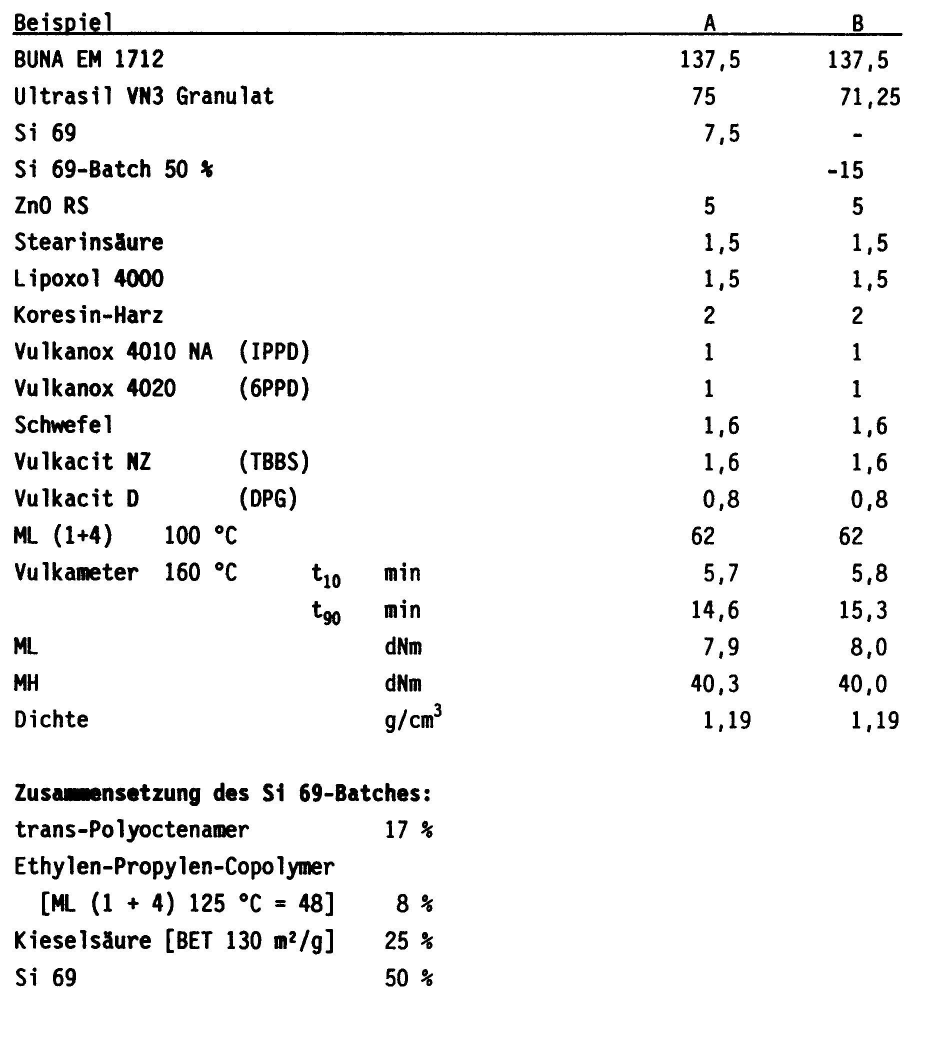

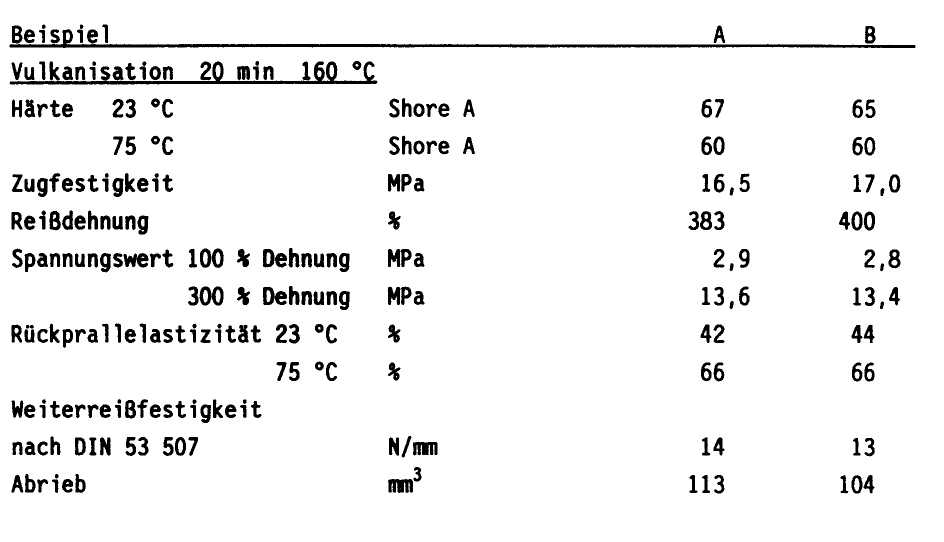

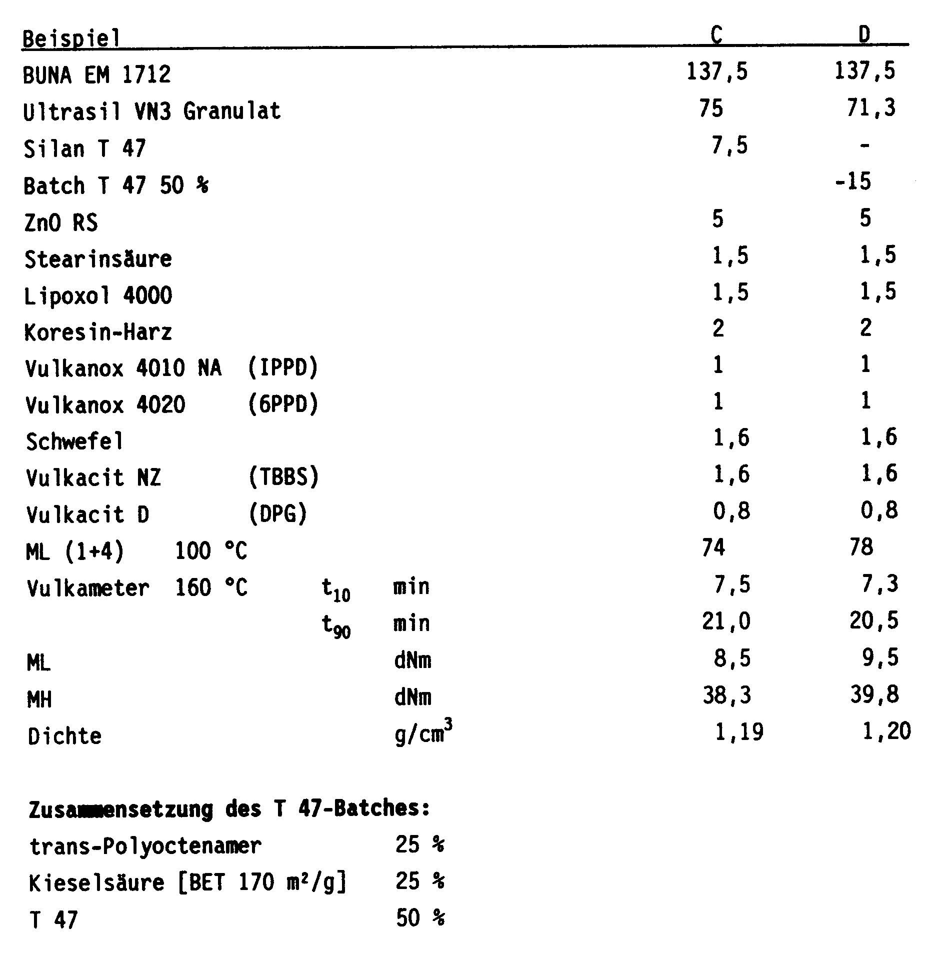

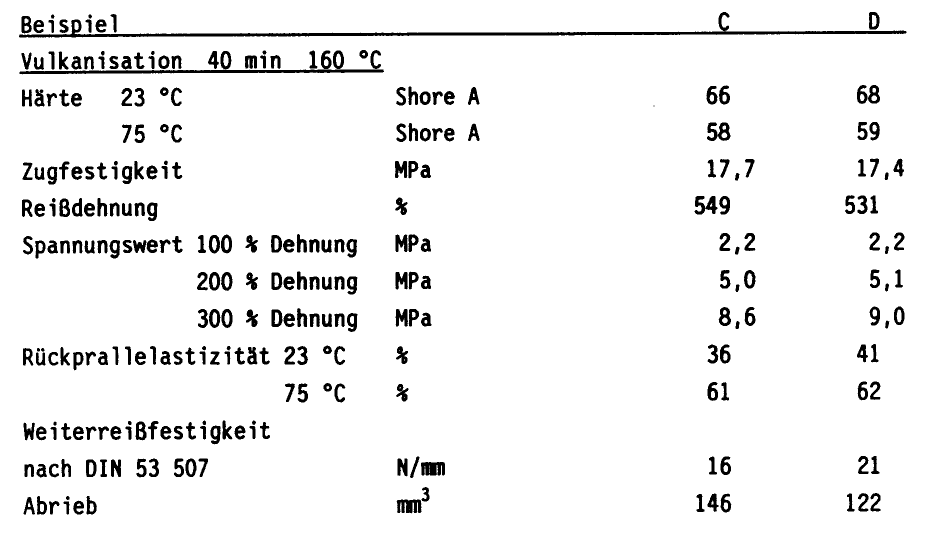

## Patentansprüche

1. Kautschukbatch mit polymerem Träger für flüssige Kautschukchemikalien,
dadurch gekennzeichnet,
daß als polymerer Träger trans-Polyoctenamer zusammen mit Kieselsäure eingesetzt wird.

2. Kautschukbatch gemäß Anspruch 1,
dadurch gekennzeichnet,
daß das trans-Polyoctenamer und die Kieselsäure im Verhältnis 1 : 1,2 bis 1,2 : 1 eingesetzt werden.

3. Kautschukbatch gemäß den Ansprüchen 1 und 2,
dadurch gekennzeichnet,
daß die flüssigen Kautschukchemikalien in Mengen von 40 bis 55 %, bezogen auf trans-Polyoctenamer und Kieselsäure eingearbeitet sind.

4. Kautschukbatch gemäß den Ansprüchen 1 bis 3,
dadurch gekennzeichnet,
daß als flüssige Kautschukchemikalien Vinyl- und Mercaptosilane, Schwefelsilane, silangruppenhaltige flüssige Polybutadiene sowie Di- und Polyglycole eingesetzt werden.

5. Verfahren zur Herstellung eines Kautschukbatches gemäß den Ansprüchen 1 bis 4,
dadurch gekennzeichnet,
daß die flüssigen Kautschukchemikalien und die Kieselsäure unter Scherung und Friktion bei ca. 80 °C in das trans-Polyoctenamer eingearbeitet werden.
